Europäisches Patentamt

European Patent Office

Office européen des brevets

(11) Publication number: **0 459 424 B1**

# EUROPEAN PATENT SPECIFICATION

(45) Date of publication of patent specification: **08.03.95**

(51) Int. Cl.6: **B01J 23/78**, B01J 35/10, C01C 1/04

(21) Application number: **91108740.1**

(22) Date of filing: **28.05.91**

The file contains technical information submitted after the application was filed and not included in this specification

(54) **Process for producing the precursor of a precipitated catalyst for the ammonia synthesis.**

(30) Priority: **29.05.90 IT 2045590**

(43) Date of publication of application:
**04.12.91 Bulletin 91/49**

(45) Publication of the grant of the patent:
**08.03.95 Bulletin 95/10**

(84) Designated Contracting States:
**AT BE CH DE DK ES FR GB GR IT LI NL SE**

(56) References cited:
**EP-A- 0 200 315**
**EP-A- 0 224 947**
**EP-A- 0 325 214**
**US-A- 3 746 658**
**US-A- 3 755 294**

(73) Proprietor: **MINISTERO DELL' UNIVERSITA' E DELLA RICERCA SCIENTIFICA E TEC-NOLOGICA**
**76, Lungotevere Thaon de Revel**
**I-00196 Roma (IT)**

(72) Inventor: **Montino, Franco, Dr.**
**30, Via Perazzi**
**I-28100 Novara (IT)**

Inventor: **Balducci, Luigi, Dr.**
**1, Piazza Italia**
**I-27036 Mortara,**
**Pavia (IT)**
Inventor: **Ferrero, Francesco, Dr.**
**28, Via Turbigo**
**I-28067 Pernate,**
**Novara (IT)**
Inventor: **Pernicone, Nicola, Dr.**
**7, Via Pansa**
**I-28100 Novara (IT)**

(74) Representative: **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

**Description**

The present invention relates to a process for producing the precursor of a precipitated catalyst for the synthesis of ammonia which is based on iron, aluminium, cobalt and potassium oxides. It furthermore relates to said precursor and to said catalyst prepared by reduction of said precursor.

At present, the iron oxide-based catalysts for the synthesis of $NH_3$ are produced by melting of magnetite with minor amounts of other oxides ($Al_2O_3$, $K_2O$, etc.), followed by solidification and by grinding to the desired particle size. In EP-A-174,078 it is disclosed that it is possible to prepare catalysts of higher activity by coprecipitation of Fe, Al and Co hydroxides from a solution which contains iron as ferric ion, addition of a precipitating alkaline solution, and subsequent reduction of the resulting precursor, after doping with K, in a mildly reducing atmosphere. According to EP-A-200,315 the co-precipitated hydroxides are calcined in air and then doped with K. Such catalysts are classified as catalysts of the "precipitated" (or "co-precipitated") type, in contrast to the conventional catalysts of the "melted" type.

There has now been found a new method for preparing said precursor which method unexpectedly leads to higher yields when the corresponding catalyst is utilized for the ammonia synthesis; other advantages thereof will become apparent from the following disclosure.

In its broadest aspect, the present invention relates to a process for producing the precursor of a "precipitated" catalyst for the ammonia synthesis, based on iron, aluminium, cobalt and potassium oxides and containing from 0.5 to 5% (preferably 2.5 to 5%) by moles of Al, from 2 to 20% (preferably 3 to 15%) by moles of Co and from 0.4 to 1% by weight of $K_2O$, comprising the steps of:

(A) preparing an aqueous solution of water-soluble compounds of Fe, Al and Co (potassium excluded), wherein iron is present as water-soluble ferrous salt of an organic acid, preferably selected from the aliphatic carboxylic acids having from 1 to 6 (particularly 2 to 4) carbon atoms, and - while operating in an inert atmosphere - causing by adition of a precipitating alkaline solution the co-precipitation of the corresponding hydroxides of Fe, Al and Co, which still contain the iron in reduced (ferrous) form;

(B) oxidizing, with $H_2O_2$, $O_2$, air or any other oxygen-containing gas, the hydroxide suspension prepared according to step (A), until the ratio of divalent iron to trivalent iron ($Fe^{2+}/Fe^{3+}$) ranges from 0.20 to 0.50; and

(C) conducting an alkaline doping operation with a potassium compound and subsequently heating the resulting mixture in an inert atmosphere to a temperature of from 850°C to 1050°C, preferably ranging from 900 to 1000°C.

The percentages of Al and Co given herein refer to the total of Al, Co and Fe present, while the amount of $K_2O$ is based on the total weight of the (calcined) precursor.

By the above process it is possible to obtain an excellent catalyst precursor wherein generally

i) the granule (particle) density ranges from 3.0 to 4.5 g/cm³ and the surface area (BET) is less than 10 m²/g and preferably ranges from 4 to 8 m²/g, the pore volume being from 0.05 to 0.20 cm³/g;

ii) at least 50% of the porosity results from pores having an average radius ranging from 15 to 30 (and preferably 15 to 25) nanometers, the compression strength being equal to or higher than 300 kg/cm², suitably being from 300 to 395 kg/cm², and preferably being at least 370 kg/cm².

Said compression strength is the resistance to axial compression, determined on small plates having a diameter of about 10 mm and a height of about 4 mm, according to ASTM-D-4179/82 (employing a punch feed speed of 1 mm/minute). In comparison, the compression strength of the plates prepared according to the prior art is (generally) lower than 200 kg/cm² and sometimes even lower than 50 kg/cm².

The catalyst obtained from this precursor (by reduction) has a high catalytic activity; in fact, kinetic constants (according to Temkin; the definitions are given below) equal to or higher than 230 and preferably equal to or higher than 280 may be achieved. After artificial ageing, said constants usually remain above 190 and preferably still have a value equal to or higher than 240.

The use of the ferrous salt of an organic acid in the preparation of the precursor of the present invention surprisingly affects the properties of the catalyst derived form said precursor. For example, the use of $FeCl_2$, in place of the organic salt, involves serious problems regarding the precursor reproducability in terms of chlorine and of potassium content, and a low catalytic activity. The co-precipitate obtained according to the invention furthermore exhibits the following advantages as compared to prior art co-precipitates derived from ferric salts:

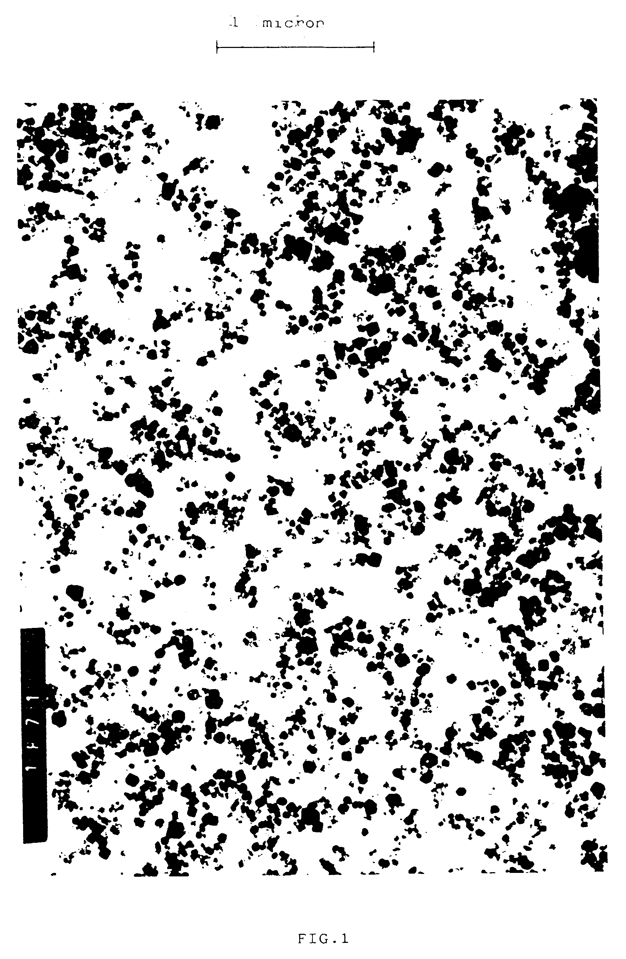

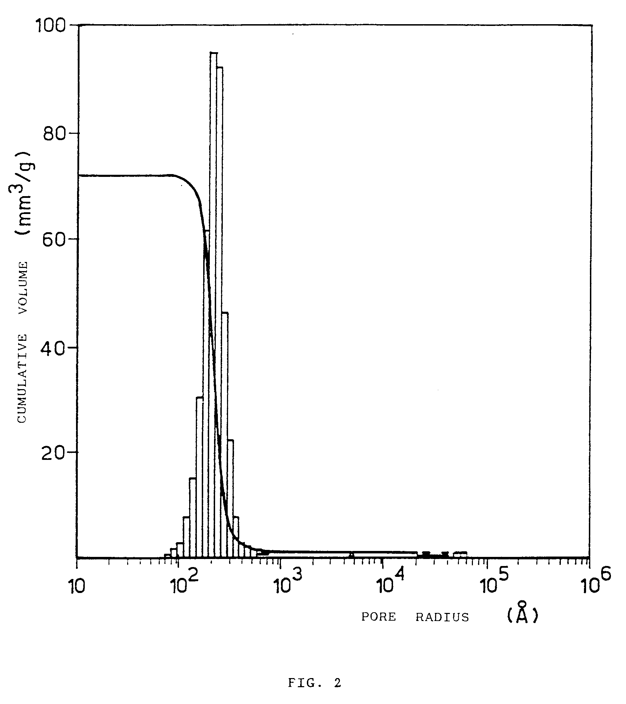

- it has the crystalline structure of magnetite instead of the amorphous structure of the ferric hydroxides, thereby facilitating process steps such as filtration and the washings which are necessary to separate the solid product form the mother liquors (and to remove the soluble salts);
- it is composed of particles having a spheroidal morphology with a narow particle size distribution (from about 0.03 to about 0.10 $\mu$m; see figure 1); consequently the compacted and sintered powders

2

EP 0 459 424 B1

exhibit a narrow and reproducable distribution of the pore radius (see figure 2; it has been observed that said characteristic exerts a very favourable influence on the catalytic synthesis of ammonia);

- the density of the present precursor is higher than that of the precursors prepared according to the conventional technique based on the co-precipitation using ferric salts; this results not only in a higher mechanical strength (to compression and to abrasion), but also affords the possibility of charging a larger amount of catalyst at the same catalytic bed volume, thereby permitting a better utilization of the plants.

Particularly satisfactory results may be achieved when said ferrous salt is selected from acetate, lactate, gluconate, and mixtures thereof, especially when furthermore:

- the concentration of ferrous ions ($Fe^{2+}$) in the starting solution ranges from 0.2 to 1.2 moles per liter of solution, the pH of said starting solution being from 4.5 to 5.5;
- the precipitating alkaline solution contains sodium hydroxide or carbonate, potassium hydroxide or carbonate, or mixtures thereof;
- the oxidation temperature ranges from 50 to 100°C, preferably from 80 to 95°C, and the pH, after addition of the precipitating alkaline solution, ranges from 6.5 to 9.5, preferably from 8 to 9, and is kept constant by further addition of alkaline solution both during heating of the hydroxide suspension and during the subsequent oxidation, the oxidation time, as a function of, e.g., the temperature, the pH, the concentration of $Fe^{2+}$ ions and the oxidizing gas flow rate, generally ranging from 3 to 6 hours;
- the precipitate obtained after oxidation, separated from the mother liquors by filtration, centrifugation or magnetic separation and washed with water in order to remove the soluble salts, is dried at a temperature of from 50 to 100°C, in an inert gas flow or under vacuum (in order to not change the $Fe^{2+}/Fe^{3+}$ ratio);
- the starting solution contains a water-soluble aluminium salt, for example chloride, lactate or mixtures thereof, in such amounts that the Al proportion in the final catalyst ranges from 2.5 to 5% by moles; (as water-soluble Al salt it is possible to use also the chloride; in fact, since the percentage of aluminium in the catalyst does not exceed 5%, the amount of Cl introduced with aluminium in this case does not result in such negative effects as those mentioned with respect to ferrous chloride);
- there are used, as water-soluble Co salts, divalent cobalt salts such as, for example, cobaltous chloride and acetate; for Co contents equal to or higher than 3% (by moles) it is preferable to use the acetate; the starting solution preferably contains said water-soluble cobalt salt, for example the acetate, in such amounts that the cobalt proportion in the finished catalyst ranges from 2 to 20% by moles, preferably from 3 to 15% ;
- for the alkaline doping, use is made of potassium in the form of the hydroxide or, preferably, the carbonate; the alkaline doping is preferably carried out by kneading the powder, dried and previously disaggregated by mild grinding, with an aqueous solution of potassium hydroxide or carbonate. The concentration of the alkaline solution is suitably selected such as to ensure that the mix assumes the best consistence for obtaining a homogeneous distribution of the alkaline element in the precursor; usually solutions containing from 0.25 to 0.30 moles/liter of K are employed; the potassium amount to be utilized for the doping is such that the finished precursor contains from 0.4 to 1.0% by weight of $K_2O$;
- drying of the precursor, doped with K, is carried out at a temperature of from 50 to 100°C in an inert gas flow or under vacuum, in order to not change the $Fe^{2+}/Fe^{3+}$ ratio.

The drying step results in a certain aggregation of the powder and the presence of aggregates, even if "weak", may be undesirable in the subsequent shaping steps. A mild grinding, optionally followed or replaced by screening, for example below 210 μm (70 Tyler mesh), eliminates this drawback, so that the powder is fit for being shaped, i.e., compacted to the geometric shape which is regarded as the most suitable. Shaping can be carried out by means of any conventional technique, for example dry pressing, extrusion of pelletizing. The pressed powders usually do not possess sufficient mechanical strength and abrasion resistance, but when they are subjected to a heat treatment, they undergo a sintering process, which is more or less intense as a function of baking temperature and time, and as a consequence of said sintering, the macroporosity of the pressed powder, which is responsible for the mechanical brittleness, is replaced by a meso-porosity, with simultaneous increase in density and mechanical strength of the sintered body. By precisely adjusting the heat-treatment conditions it is possible to accurately modulate the surface area in the best mode (from 4 to 8 $m^2/g$), thereby obtaining surprisingly better results in comparison with both the melted precursors (surface area: lower than 1 $m^2/g$) and the precipitated precursors of the prior art (surface area: higher than 20 $m^2/g$). The heat treatment is carried out in an inert gas environment, preferably selected from $N_2$, Ar or mixtures thereof, at temperatures ranging from 850 to 1050°C, preferably from 900 to 1000°C and for periods of time of from 1 to 3 hours. Heat treatments in a reducing atmosphere, with

3

$CO/CO_2$ mixtures, did not provide satisfactory results. As a consequence of the heat treatment, the precursors prepared according to the present process develop a meso-porosity characterized by a very narrow pore size distribution (see figure 2); this results not only in a better mechanical strength, but also and unexpectedly in a higher catalytic activity. In particular, the best results, in terms of catalytic activity, are achieved when at least 50% of the porosity are due to pores having an average radius of from 15 to 30 nanometers.

The following examples are given for merely illustrative purposes and do not limit the scope of the invention.

### Example 1 (Catalyst containing 6% by moles of cobalt)

Part (A) (Preparation of ferrous acetate)

51.6 g of Fe in powder form were dissolved in 136 g of glacial acetic acid diluted with 700 ml of $H_2O$; this operation was conducted under a $N_2$ atmosphere, with stirring, maintaining the temperature at about 100°C for 5 hours. The solution, green colored and thoroughly limpid, was cooled to room temperature and maintained in a $N_2$ atmosphere until used.

Part (B) (Co-precipitation and oxidation)

15.42 g of $Co(CH_3COO)_2.4H_2O$ and 11.42 g of $AlCl_3.6H_2O$ were dissolved in the ferrous acetate solution prepared in Part (A), kept under stiring and in a $N_2$ flow. The resulting solution was brought to pH 9 by gradual addition of a 5 M aqueous solution of NaOH, using about 550 ml thereof. The temperature was then brought to 90°C, keeping the pH constant by further addition of the 5 M NaOH solution. After having stopped the $N_2$ flow, air (50 litres/h) was blown into the hydrated oxide suspension, thus starting the oxidation step. Also during this step the pH (which tends to decrease) was kept constant (always with NaOH) at a value of about 9. The progress of the oxidation was followed by determining the redox potential values of the suspension (starting value = about -780 mV; final value = about -250 mV). The oxidation reaction time was about 4 hours. Precipitation and oxidation were carried out in a 3-litre glass flask equipped with teflon stirrer, heating jacket, dropping funnel, reflux cooler, thermometer, plunging pipe, sparger for the air blowing and electrodes for measuring the pH and the redox potential. The precipitate (black magnetic powder) was washed three times by decantation, then was filtered on a Büchner filter and washed twice with 200 ml of deionized water. The filter cake was then dried in an oven at 70°C under vacuum, thus obtaining 75 g of a powder, which was disaggregated by grinding in a mortar. The powder was subjected to analyses, which revealed that the mol-% of Co and Al, i.e. the values:

$$\frac{Co\ atoms}{(Co+Al+Fe)\ atoms} \times 100 \quad and \quad \frac{Al\ atoms}{(Co+Al+Fe)\ atoms} \times 100$$

were fully in accordance with those which had been calculated on the basis of the utilized reagents. In particular there were found: Co = 6.0%; Al = 4.5%. The $Fe^{2+}/Fe^{3+}$ ratio was equal to about 0.27:1.

Part (C) Alkaline doping (with KOH) and pelletizing

The powder obtained according to Part (B) was kneaded, in a porcelain capsule, with an aqueous solution containing 15.12 g/liter of KOH (55 ml of solution per 100 g of powder), thereby obtaining a doped product (precursor) containing 0.7% by weight of $K_2O$. 1.5 g of precursor in powder form were pressed, at 800 bar and for 2 minutes, in a cylindrical mold having an internal diameter of 12 mm; no lubricants were used in order to prevent any pollution of the catalyst pellets.

Part (D) Heat treatment and final grinding

The pellets (12x5 mm) were charged into an alumina nacelle, which was introduced into a quartz tube, electrically heated to 1000°C by means of a tubular muffle, in an inert atmosphere (argon), in order to prevent a further increase in the oxidation degree of the iron. Then the product was cooled down to room temperature, while keeping it in an inert atmosphere. The values of the surface area and of the pore volume were 4.7 m²/g and 0.076 cm³/g, respectively. Regarding the porosity there was determined an average radius of the pores ranging from 15 to 30 nanometers which accounted for about 60% of the total porosity (total volume of the pores). The pellets, partially sintered (particle density = 3.25 g/cm³), were crushed in an agate mortar and screened; the fraction between 297 and 500 μm (35-50 Tyler mesh) was utilized for the ammonia synthesis tests.

Part (E) Preparation of the precursor sample and reduction of same to catalyst

2.485 g of ground precursor were poured into a graduated 5 ml cylinder (internal diameter = 6 mm). After settling of the catalytic mass (by slightly hitting the cylinder walls) the volume was read (1.29 cm³) and an inert diluent was added, which consisted of alumina having the same particle size, in an amount such as to obtain 5 cm³ of mixture. The mixture, after having been taken out of the cylinder, was manually homogenized in a testing reactor. The precursor was then reduced to the catalyst in a nitrogen and hydrogen flow ($H_2:N_2$ = 3:1 by moles; flow rate = 50 Nl/h) at a pressure of 6 bar. The temperature was brought to 300°C within 90 minutes and then was caused to rise at 50°C/h up to 480°C; the pressure was raised to 50 bar and the final conditions were maintained constant for 16 hours. The precursor reduction and the subsequent catalytic activity tests were carried out in a tubular microreactor made of AISI 316, equipped with a thermocouple and heated in a vertical electric muffle, fed with hydrogen and nitrogen (in a molar ratio of 3:1) and having an internal diameter of 11 mm.

Part (F) Ammonia synthesis tests (before and after ageing)

On conclusion of the reduction operations illustrated in Part (E), the temperature was lowered to 450°C, keeping constant both pressure and flow rate, and then (maintaining constant both temperature and pressure) the flow rate of the gaseous mixture ($3H_2 + N_2$) was varied in the range of from 6 to 300 Nl/hour. The gas leaving the reactor was caused to flow through a titrated solution of sulphuric acid, in order to determine the $NH_3$ concentration. The catalyst activity in the $NH_3$ synthesis was expressed by means of the kinetic constant ($K_2$) of the Temkin equation, in the version described by D.C. Dyson and J.M. Simon (I.E.C. FUNDAMENTALS; vol.7; No. 4; November 1968; page 605). Said equation can be represented as follows:

$$r = K_2[K^2_{eq} \, a_N(a^3_H/a^2_A)^{\alpha} - (a^2_A/a^3_H)^{(1-\alpha)}]$$

where: $a_N$, $a_H$ and $a_A$ are the activities of nitrogen, of hydrogen and of ammonia; $K_{eq}$ is the equilibrium constant; $K_2$ is the kinetic constant to be determined and r is the reaction rate which can be expressed as

$$\frac{\text{kmoles/h of } NH_3}{m^3 \text{ of apparent volume of pure catalyst}}$$

and is determined experimentally. To coefficient $\alpha$ of the Temkin equation, a value of 0.75 was assigned. In the present case, the apparent volume was 1.29 cm³ ($1.29 \times 10^{-6}$ m³).

After having determined the catalytic activity (at 450°C) in the manner described above, the catalyst was treated at 550°C, for 6 hours, with the same mixture (hydrogen + nitrogen), simulating an ageing process; then the measurement of the catalytic activity (at 450°C) was repeated and the kinetic constant ($K_2$) after ageing was determined. The results of the activity tests, before and after ageing, are shown in Table 1 along with the most significant physical data.

Example 2 - Comparative test (co-precipitation from $FeCl_3 + FeCl_2$; Co = 6% by moles)

Example 1 was repeated, maintaining constant the atomic percentages of Co and Al (i.e. the catalyst composition), but varying the operative modalities according to the teaching of EP-A-174,078. In particular, the ferrous acetate solution was replaced by a ferrous chloride and ferric chloride solution, in a molar ratio of 2:1, and after the co-precipitation, carried out in an inert atmosphere, the ferrous salt oxidation step was omitted.

The test was conducted according to the following modalities, using the apparatus described in example 1.

5

58.2 g of hydrated $FeCl_2$, corresponding to 0.289 moles of $Fe^{2+}$, were dissolved in one liter of water in a nitrogen flow. In the limpid ferrous salt solution there were dissolved 161.1 g of $FeCl_3.6H_2O$ (0.596 moles of $Fe^{3+}$), 14.94 g of $Co(CH_3COO)_2.4H_2O$ (0.06 moles) and 11.1 g of $AlCl_3.6H_2O$ (0.046 moles). Maintaining the nitrogen flow, the temperature was brought to 90°C; then the pH was brought to 9 by adding dropwise a 5M NaOH solution, using 565 ml thereof. On conclusion of the NaOH addition, the resulting powder suspension (black and magnetic) was allowed to cool down to room temperature, always in a nitrogen flow. The subsequent steps were conducted in similar manner as those in example 1. The analysis carried out on the powder revealed a O/Fe ratio close to 1.40, higher than the expected ratio of 1.33. The catalytic activity test was conducted as in example 1, charging 1.29 $cm^3$ of catalyst into the reactor. The (low) catalytic activity of the resulting catalyst is indicated in Table 1.

Example 3 (precursor containing 6% by mols of cobalt and 3.5% by mols of aluminium)

Example 1 was repeated, varying quantitatively the starting composition in order to have in the precursor 6.0% by mols of Co and 3.5% by moles of Al. The precipitate was subjected, after washing and filtering, to TEM analysis (transmission electron microscopy), which revealed that the powder consisted of spheroidal particles having an average size of about 0.04 $\mu$m. The alkaline doping was carried out with an aqueous solution containing 18.5 g/l of $K_2CO_3$, using 56 ml thereof for 100 g of dried powder, so that the $K_2O$ content of the precursor was equal to 0.7% by weight. After pelletizing and heat treatment as in example 1, the $Fe^{2+}/Fe^{3+}$ ratio was equal to 0.32. The values of the surface area and of the pore volume were 5.7 $m^2/g$ and 0.064 $cm^3/g$, respectively; the porosity due to pores having a pore radius ranging from 15 to 30 nanometers was about 80% of the total porosity (total volume of the pores). The catalytic activity determination, before and after ageing, was carried out using 1.29 $cm^3$ of catalyst. The results, along with the most significant physical data are reported in Table 2.

Example 4 (Catalyst containing 3% by moles of cobalt and 4.6% by moles of aluminium)

Example 1 was repeated, but the starting composition was quantitatively varied so as to have 3.0% by moles of Co and 4.6% by moles of Al in the precursor. The precipitate was subjected, after washing and filtering, to TEM analysis which revealed that the powder consisted of spheroidal particles having an average size of about 0.05 $\mu$m. The alkaline doping as well as the subsequent pelletizing and heat treatment operations were carried out as described in example 1. The values of the surface area and of the pore volume were 5.0 $m^2/g$ and 0.078 $cm^3/g$, respectively; the porosity due to pores of a pore radius ranging from 15 to 30 nanometers was about 60% of the total porosity, while the $Fe^{2+}/Fe^{3+}$ ratio was equal to 0.37. The catalytic activity determination was carried out using 1.25 $cm^3$ of catalyst. Data and results are indicated in Table 2.

TABLE 1

| EXAMPLE | 1 | 2 (*) |
|---|---|---|
| PHYSICAL DATA: | | |
| Particle density (g/cm$^3$) | 3.88 | 2.94 |
| Surface area (m$^2$/g) | 4.7 | 1.0 |
| Pore volume (cm$^3$/g) | 0.076 | 0.141 |
| Fraction of the pore volume due to pores having a radius of from 15 to 30 nm | 60% | 15% |
| Fe$^{2+}$ : Fe$^{3+}$ | 0.27 | 0.20 |
| Compression strength (kg/cm$^2$) | 380 | - |
| KINETIC CONSTANT (K$_2$): | | |
| initial | 252 | 21.5 |
| after ageing | 200 | - |

(*) Comparative test

TABLE 2

| EXAMPLE | 3 | 4 |
|---|---|---|
| PHYSICAL DATA: | | |
| Particle density (g/cm$^3$) | 3.55 | 4.09 |
| Surface area (m$^2$/g) | 5.7 | 5.0 |
| Pore volume (cm$^3$/g) | 0.064 | 0.078 |
| Fraction of the pore volume due to pores having a radius of from 15 to 30 nm | 80% | n.d. |
| Fe$^{2+}$ : Fe$^{3+}$ | 0.32 | 0.37 |
| Compression strength (kg/cm$^2$) | 370 | 395 |
| KINETIC CONSTANT ($K_2$): | | |
| initial | 286 | 233 |
| after ageing | 242 | - |
| n.d. = not determined | | |

## Claims

1. Process for producing the precursor of a precipitated catalyst for the ammonia synthesis, based on iron, aluminium, cobalt and potassium oxides and containing from 0.5 to 5% by moles of Al, from 2 to 20% by moles of Co and from 0.4 to 1% by weight of $K_2O$, comprising the steps of:

   (A) adding, in an inert atmosphere, alkaline solution to an aqueous solution of water-soluble compounds of Fe, Al and Co wherein iron is present as water-soluble ferrous salt of an organic acid, thereby causing the co-precipitation of the Fe, Al and Co hydroxides, which still contain the iron in the ferrous form;

   (B) oxidizing, with $H_2O_2$, $O_2$, air or any other oxygen-containing gas, the hydroxide suspension prepared according to step (A) until the ratio of divalent iron to trivalent iron ($Fe^{2+}/Fe^{3+}$) ranges from 0.20 to 0.50; and

   (C) conducting an alkaline doping operation with a potassium compound and subsequently heating the mixture in an inert atmosphere to a temperature of from 850°C to 1050°C.

2. Process according to claim 1, wherein iron is present as water-soluble ferrous salt of an organic acid selected from the aliphatic carboxylic acids having from 1 to 6 carbon atoms.

3. Process according to claims 2, wherein said water-soluble ferrous salt is selected from ferrous acetate, lactate, gluconate and mixtures thereof.

4. Process according to any one of the preceding claims, wherein the concentration of ferrous ions ($Fe^{2+}$) in the starting solution ranges from 0.2 to 1.2 moles per liter of solution, the pH of said starting solution being from 4.5 to 5.5; and/or the precipitating alkaline solution contains sodium hydroxide or carbonate, potassium hydroxide or carbonate, or mixtures thereof; and/or the oxidation temperature ranges from 50 to 100°C; and/or the pH, after addition of the precipitating alkaline solution, ranges from 6.5 to 9.5 and is kept constant by further addition of alkaline solution both during heating of the hydroxide suspension and during the subsequent oxidation; and/or the precipitate obtained after oxidation, separated from the mother liquors by filtration, centrifugation or magnetic separation and washed with water, is dried at a temperature of from 50 to 100°C in an inert gas flow or under vacuum.

5. Process according to claim 4, wherein the oxidation temperature ranges from 80 to 95°C; and/or the pH, after addition of the precipitating alkaline solution, ranges from 8 to 9.

6. Process according to any one of the preceding claims, wherein the starting solution contains a water-soluble aluminium salt, such as chloride, lactate or mixtures thereof, in such amounts that the Al proportion in the final catalyst ranges from 2.5 to 5% by moles.

7. Process according to any one of the preceding claims, wherein as water-soluble Co salts divalent cobalt salts such as cobaltous chloride and acetate are used, the use of the acetate being preferred for Co contents equal to or higher than 3% by moles.

8. Process according to claim 7, wherein the starting solution contains a water-soluble Co salt, such as chloride or acetate, in such amounts that the Co proportion in the final catalyst ranges from 3 to 15% by moles.

9. Process according to any one of the preceding claims, wherein potassium hydroxide or carbonate is used for the alkaline doping.

10. Process accoridng to claim 9, wherein the alkaline doping is carried out by first disaggregating the precipitated and dried mass and then kneading it with an aqueous solution of potassium hydroxide or carbonate containing from 0.25 to 0.30 moles of potassium per liter.

11. Process according to any one of the preceding claims, wherein the mixture, after the alkaline doping, is dried at a temperature of from 50 to 100°C in an inert gas flow or under vacuum, and then is subjected to grinding, optionally followed or substituted by screening.

12. Process according to claim 11, comprising screening below 210 $\mu$m (70 Tyler mesh).

13. Process according to any one of the preceding claims, wherein in step (C) the mixture is heated in an inert gaseous medium selected from nitrogen, argon or mixtures thereof, at temperatures of from 900 to 1000°C.

14. Process according to any one of the preceding claims, wherein the obtained precursor has:
   i) a particle density ranging from 3.0 to 4.5 g/cm$^3$, the surface area (BET) ranging from 4 to 10 m$^2$/g and the pore volume ranging from 0.05 to 0.20 cm$^3$/g;
   ii) at least 50% of the porosity being due to pores having an average radius of from 15 to 30 nm, the compression strength ranging from 300 to 395 kg/cm$^2$.

15. Precursor of a catalyst for the ammonia synthesis, based on Fe, Al, Co and K oxides, containing from 0.5 to 5% by moles of Al, from 2 to 20% by moles of Co and from 0.4 to 1% by weight of K$_2$O, characterized in that:
   i) the particle density ranges from 3.0 to 4.5 g/cm$^3$, the surface area (BET) ranges from 4 to 10 m$^2$/g and the pore volume ranges from 0.05 to 0.20 cm$^3$/g;
   ii) at least 50% of the porosity is due to pores having an average radius of from 15 to 30 nm, the compression strength ranging from 300 to 395 kg/cm$^2$.

16. The precursor according to claim 15, containing from 2.5 to 5% by moles of Al, and/or from 3 to 15% by moles of Co.

17. The precursor according to any one of claims 15 or 16, wherein the surface area ranges from 4 to 8 m$^2$/g.

18. The precursor according to any one of claims 15 to 17, comprising particles having a spheroidal morphology and an average size ranging from 0.03 to 0.10 $\mu$m.

19. Catalyst for the synthesis of ammonia, prepared by reduction of the catalyst precursor according to any one of claims 15 to 18.

20. Catalyst according to claim 19, wherein the reduction is carried out by means of nitrogen and hydrogen mixtures.

**Patentansprüche**

1. Verfahren zur Herstellung des Vorläufers eines gefällten Katalysators für die Ammoniaksynthese auf Basis von Eisen-, Aluminium-, Kobalt- und Kaliumoxiden, der 0,5 bis 5 Mol-% Al, 2 bis 20 Mol-% Co

EP 0 459 424 B1

und 0,4 bis 1 Gew.-% $K_2O$ enthält, das die Schritte umfaßt:

(A) Zugeben, in einer inerten Atmosphäre, einer alkalischen Lösung zu einer wäßrigen Lösung wasserlöslicher Fe-, Al- und Co-Verbindungen, worin Eisen als wasserlösliches Eisen(II)-salz einer organischen Säure vorliegt, wodurch die Kopräzipitation der Fe-, Al- und Co-Hydroxide bewirkt wird, die das Eisen noch in Eisen(II)-Form enthalten;

(B) Oxidieren, mit $H_2O_2$, $O_2$, Luft oder irgendeinem anderen sauerstoffhaltigen Gas, der nach Schritt (A) hergestellten Hydroxidsuspension bis das Verhältnis von zweiwertigem Eisen zu dreiwertigem Eisen ($Fe^{2+}/Fe^{3+}$) zwischen 0,20 und 0,50 liegt; und

(C) Durchführen eines alkalischen Dotiervorgangs mit einer Kaliumverbindung und nachfolgendes Erhitzen der Mischung in einer inerten Atmosphäre auf eine Temperatur von 850°C bis 1050°C.

2. Verfahren nach Anspruch 1, worin Eisen als wasserlösliches Eisen(II)-salz einer organischen Säure vorliegt, die aus aliphatischen Carbonsäuren mit 1 bis 6 Kohlenstoffatomen ausgewählt ist.

3. Verfahren nach Anspruch 2, worin das wasserlösliche Eisen(II)-salz aus Eisen(II)-acetat, -lactat, -gluconat und Mischungen davon ausgewählt ist.

4. Verfahren nach einem der vorhergehenden Ansprüche, worin die Konzentration an Eisen(II)-ionen ($Fe^{2+}$) in der Ausgangslösung zwischen 0,2 und 1,2 Mol pro Liter Lösung beträgt, wobei der pH der Ausgangslösung zwischen 4,5 und 5,5 liegt; und/oder die alkalische Fällungslösung Natriumhydroxid oder -carbonat, Kaliumhydroxid oder -carbonat, oder Mischungen davon enthält; und/oder die Oxidationstemperatur zwischen 50 und 100°C liegt; und/oder der pH, nach Zugabe der alkalischen Fällungslösung, zwischen 6,5 und 9,5 liegt und durch weitere Zugabe alkalischer Lösung sowohl während des Erhitzens der Hydroxidsuspension als auch während der nachfolgenden Oxidation konstant gehalten wird; und/oder das nach der Oxidation erhaltene, von der Mutterlösung durch Filtration, Zentrifrngation oder magnetische Trennung abgetrennte und mit Wasser gewaschene Präzipitat bei einer Temperatur von 50 bis 100°C in einem Inertgasstrom oder unter Vakuum getrocknet wird.

5. Verfahren nach Anspruch 4, worin die Oxidationstemperatur zwischen 80 und 95°C liegt; und/oder der pH, nach Zugabe der alkalischen Fällungslösung, zwischen 8 und 9 liegt.

6. Verfahren nach einem der vorhergehenden Ansprüche, worin die Ausgangslösung ein wasserlösliches Aluminiumsalz, beispielsweise Chlorid, Lactat oder Mischungen davon, in solchen Mengen enthält, daß der Aluminiumanteil im fertigen Katalysator zwischen 2,5 und 5 Mol-% liegt.

7. Verfahren nach einem der vorhergehenden Ansprüche, worin als wasserlösliche Co-Salze zweiwertige Kobaltsalze wie Cobalt(II)-chlorid und -acetat verwendet werden, wobei die Verwendung des Acetats für Cobaltgehalte gleich oder höher als 3 Mol-% bevorzugt wird.

8. Verfahren nach Anspruch 7, worin die Ausgangslösung ein wasserlösliches Kobaltsalz, beispielsweise Chlorid oder Acatat, in solchen Mengen enthält, daß der Kobaltanteil im fertigen Katalysator zwischen 3 und 15 Mol-% liegt.

9. Verfahren nach einem der vorhergehenden Ansprüche, worin für die alkalische Dotierung Kaliumhydroxid oder -carbonat eingesetzt wird.

10. Verfahren nach Anspruch 9, worin die alkalische Dotierung durchgeführt wird, indem man die gefällte und getrocknete Masse zuerst disaggregiert und dann mit einer wäßrigen Lösung von Kaliumhydroxid oder -carbonat, die 0,25 bis 0,30 Mol Kalium pro Liter enthält, verknetet.

11. Verfahren nach einem der vorhergehenden Ansprüche, worin die Mischung nach der alkalischen Dotierung bei einer Temperatur von 50 bis 100°C in einem Inertgasstrom oder unter Vakuum getrocknet wird und dann einem Mahlvorgang, dem ein Siebvorgang folgt oder der durch einen Siebvorgang ersetzt ist, unterworfen wird.

12. Verfahren nach Anspruch 11, das Siebung unter 210 $\mu$m (70 Tyler-Mesh) umfaßt.

9

**13.** Verfahren nach einem der vorhergehenden Ansprüche, worin die Mischung in Schritt (C) in einem inerten gasförmigen Medium, ausgewählt aus Stickstoff, Argon oder Mischungen davon, bei Temperaturen von 900 bis 1000°C erhitzt wird.

**14.** Verfahren nach einem der vorhergehenden Ansprüche, worin der erhaltene Vorläufer aufweist:

i) eine Teilchendichte zwischen 3,0 und 4,5 g/cm$^3$, wobei die Oberfläche (BET) zwischen 4 und 10 m$^2$/g und das Porenvolumen zwischen 0,05 und 0,20 cm$^3$/g liegt;

ii) wobei wenigstens 50% der Porosität auf Poren mit einem durchschnittlichen Radius von 15 bis 30 nm zurückgehen und die Druckfestigkeit zwischen 300 und 395 kg/cm$^2$ liegt.

**15.** Vorläufer eines Katalysators für die Ammoniaksynthese auf Basis von Fe-, Al-, Co- und K-Oxiden, der 0,5 bis 5 Mol-% Al, 2 bis 20 Mol-% Co und 0,4 bis 1 Gew.-% K$_2$O enthält, dadurch gekennzeichnet, daß:

i) die Teilchendichte zwischen 3,0 und 4,5 g/cm$^3$, die Oberfläche (BET) zwischen 4 und 10 m$^2$/g und das Porenvolumen zwischen 0,05 und 0,20 cm$^3$/g liegt;

ii) wenigstens 50% der Porosität auf Poren mit einem durchschnittlichen Radius von 15 bis 30 nm zurückgehen, wobei die Druckfestigkeit zwischen 300 und 395 kg/cm$^2$ liegt.

**16.** Vorläufer nach Anspruch 15, der 2,5 bis 5 Mol-% Al und/oder 3 bis 15 Mol-% Co enthält.

**17.** Vorläufer nach einem der Ansprüche 15 oder 16, worin die Oberfläche zwischen 4 und 8 m$^2$/g liegt.

**18.** Vorläufer nach einem der Ansprüche 15 bis 17, der Teilchen mit sphäroidaler Morphologie und einer durchschnittlichen Größe zwischen 0,03 und 0,10 $\mu$m umfaßt.

**19.** Katalysator für die Ammoniaksynthese, hergestellt durch Reduktion des Katalysatorvorläufers nach einem der Ansprüche 15 bis 18.

**20.** Katalysator nach Anspruch 19, worin die Reduktion mit Mischungen aus Stickstoff und Wasserstoff durchgeführt wird.

**Revendications**

**1.** Procédé de préparation d'un précurseur d'un catalyseur précipité pour la synthèse d'ammoniac, à base d'oxydes de fer, d'aluminium, de cobalt et de potassium et contenant de 0,5 à 5 % en moles d'Al, de 2 à 20 % en moles de Co et de 0,4 à 1 % en poids de K$_2$O, comprenant les étapes

(A) d'addition, dans une atmosphère inerte, d'une solution alcaline à une solution aqueuse de composés hydrosolubles de Fe, Al et Co dans laquelle le fer est présent sous forme d'un sel ferreux hydrosoluble d'un acide organique, déclenchant ainsi la précipitation conjointe d'hydroxydes de Fe, d'Al et de Co qui contiennent le fer toujours à l'état ferreux,

(B) d'oxydation, par H$_2$O$_2$, O$_2$, l'air ou d'autres gaz contenant de l'oxygène, de la suspension d'hydroxydes préparée dans l'étape (A) jusqu'à ce que le rapport de fer divalent au fer trivalent (Fe$^{2+}$/Fe$^{3+}$) soit compris entre 0,2 et 0,50, et

(C) de réalisation d'un dopage alcalin avec un composé de potassium, puis chauffage du mélange dans une atmosphère inerte jusqu'à une température comprise entre 850 et 1050 °C.

**2.** Procédé conforme à la revendication 1, dans lequel le fer est présent sous forme d'un sel ferreux hydrosoluble d'un acide organique choisi parmi les acides carboxyliques aliphatiques comportant de 1 à 6 atomes de carbone.

**3.** Procédé conforme à la revendication 2, dans lequel ledit sel ferreux hydrosoluble est choisi parmi l'acétate ferreux, le lactate ferreux, le gluconate ferreux et les mélanges de ceux-ci.

**4.** Procédé conforme à une quelconque des revendications précédentes, dans lequel la concentration d'ions ferreux (Fe$^{2+}$) dans la solution de départ est comprise entre 0,2 et 1,2 moles par litre de solution, le pH de ladite solution de départ étant compris entre 4,5 et 5,5, et/ou la solution alcaline déclenchant la précipitation contient de l'hydroxyde ou du carbonate de sodium, de l'hydroxyde ou du carbonate de potassium ou des mélanges de ceux-ci, et/ou la température d'oxydation est comprise entre 50 et 100 °C, et/ou le pH, après l'addition de la solution alcaline déclenchant la précipitation, est compris entre 6,5 et 9,5 et est maintenu constant par addition de solution alcaline supplémentaire à la fois pendant le chauffage de la suspension d'hydroxyde et pendant l'oxydation consécutive, et/ou le précipité obtenu après l'oxydation, séparé de la liqueur-mère par filtration, centrifugation ou séparation magnétique et lavé avec de l'eau, est séché à une température comprise entre 50 et 100 °C dans un flux de gaz inerte ou sous vide.

5. Procédé conforme à la revendication 4, dans lequel la température d'oxydation est comprise entre 80 et 95 °C, et/ou le pH, après addition de la solution alcaline déclenchant la précipiation, est compris entre 8 et 9.

6. Procédé conforme à une quelconque des revendications précédentes, dans lequel la solution de départ contient un sel d'aluminium hydrosoluble, tel qu'un chlorure, un lactate ou des mélanges de ceux-ci, en une quantité telle que la proportion d'aluminium dans le catalyseur final soit comprise entre 2,5 et 5 % en moles.

7. Procédé conforme à une quelconque des revendications précédentes, dans lequel on utilise, comme sels de cobalt hydrosolubles, des sels de cobalt divalents, tels que le chlorure et l'acétate cobalteux, l'utilisation de l'acétate étant préférée pour des teneurs en Co égales ou supérieures à 3 % en moles.

8. Procédé conforme à la revendication 7, dans lequel la solution de départ contient un sel de cobalt hydrosoluble, tel que le chlorure ou l'acétate, en une quantité telle que la proportion de Co dans le catalyseur final soit comprise entre 3 et 15 % en moles.

9. Procédé conforme à une quelconque des revendications précédentes dans lequel on utilise pour le dopage alcalin de l'hydroxyde ou du carbonate de potassium.

10. Procédé conforme à la revendication 9, dans lequel le dopage alcalin est effectué en désagrégeant dans un premier temps la masse précipitée et séchée et en la malaxant avec une solution aqueuse d'hydroxyde ou de carbonate de potassium contenant de 0,25 à 0,30 moles par litre de potassium.

11. Procédé conforme à une quelconque des revendications précédentes, dans lequel le mélange, après le dopage alcalin, est séché à une température comprise entre 50 et 100 °C dans un flux de gaz inerte ou sous vide, et est ensuite soumis à un broyage, éventuellemen suivi ou remplacé par un tamisage.

12. Procédé conforme à la revendication 11 comprenant un tamisage avec un tamis dont la taille des mailles ne dépasse pas 210 $\mu$m (70 mesh Tyler).

13. Procédé conforme à une quelconque des revendications précédentes, dans lequel dans l'étape (C), le mélange est chauffé dans un milieu gazeux inerte choisi parmi l'azote, l'argon ou des mélanges de ceux-ci, à une température comprise entre 900 et 1 000 °C.

14. Procédé conforme à une quelconque des revendications précédentes dans lequel
i) la masse volumique des particules du précurseur obtenu est comprise entre 3,0 et 4,5 g/cm$^3$, la surface spécifique (BET) est comprise entre 4 et 10 m$^2$/g et le volume des pores est compris entre 0,05 et 0,20 cm$^3$/g,
ii) au moins 50 % de la porosité du précurseur obtenu est due à des pores ayant un rayon moyen compris entre 15 et 30 nm, la résistance à la compression étant comprise entre 300 et 395 kg/cm$^2$.

15. Précurseur d'un catalyseur pour la synthèse d'ammoniac, à base d'oxydes de Fe, d'Al, de Co et de K, contenant de 0,5 à 5 % en moles d'Al, de 2 à 20 % en moles de Co et de 0,4 à 1 % en poids de K$_2$O, caractérisé en ce que
i) la masse volumique des particule est comprise entre 3,0 et 4,5 g/cm$^3$, la surface spécifique (BET) est comprise entre 4 et 10 m$^2$/g et le volume des pores est compris entre 0,05 et 0,20 cm$^3$/g,
ii) au moins 50 % de la porosité est due à des pores ayant un rayon moyen compris entre 15 et 30 nm, la résistance à la compression étant comprise entre 300 et 395 kg/cm$^2$.

**16.** Précurseur conforme à la revendication 15, contenant de 2,5 à 5 % en moles d'Al et/ou de 3 à 15 % en moles de Co.

**17.** Précurseur conforme à une quelconque des revendications 15 ou 16 dans lequel la surface spécifique est comprise entre 4 et 8 m$^2$/g.

**18.** Précurseur conforme à une quelconque des revendications 15 à 17 comprenant des particules ayant une morphologie sphéroïde et une taille moyenne comprise entre 0,03 et 0,1 $\mu$m.

**19.** Catalyseur pour la synthèse d'ammoniac, préparé par réduction du précurseur de catalyseur conforme à une quelconque des revendications 15 à 18.

**20.** Catalyseur conforme à la revendication 19, dans lequel la réduction est réalisée à l'aide d'un mélange d'azote et d'hydrogène.

1 micron

FIG.1

FIG. 2